Europäisches Patentamt

European Patent Office

Office européen des brevets

(11) Publication number: **0 253 630**
**A1**

# EUROPEAN PATENT APPLICATION

(21) Application number: **87306221.0**

(22) Date of filing: **14.07.87**

(51) Int. Cl.⁴: **F 16 L 41/00**
**F 16 L 55/10**

(30) Priority: **15.07.86 GB 8617174**

(43) Date of publication of application:
**20.01.88 Bulletin 88/03**

(84) Designated Contracting States:
**AT BE CH DE ES FR GB GR IT LI NL SE**

(71) Applicant: **ANGUS FIRE ARMOUR LIMITED**
**Bentham**
**Lancaster LA2 7NA (GB)**

**The Thames Water Authority**
**Nugent House Vastern Road**
**Reading RG1 8DB (GB)**

(72) Inventor: **Rodriquez, Alan**
**Lodge Farm Rabbit Lane**
**Gressingham Lancaster LA2 8LP (GB)**

**Waller, Clifford Brian**
**17 Hillbottom Close Whitchurch Hill**
**Reading Berkshire RG8 7PX (GB)**

**Rose, John Arthur**
**Royd Hill Tha Mains**
**Giggleswick Settle BD24 0AX (GB)**

**Doyle, Anthony William**
**33 Gatcombe Close Calcot**
**Reading Berkshire (GB)**

(74) Representative: **Brooke-Smith, Fred et al**
**STEVENS, HEWLETT & PERKINS 5 Quality Court**
**Chancery Lane**
**London WC2A 1HZ (GB)**

(54) A method of pipe renovation.

(57) A lateral connection for a mains pipe 10 having an internal liner 12 comprises a bolt 14 having a throughbore 15 and a flange 18. A washer is held with respect to the bolt 14 by a nut 20 so that a seal is made between the liner 12 and the flange 18. The bolt is also held with respect to the pipe 10 by means of a shoulder member 24 which spans the opening in the pipe 10 and a second nut 27 engaged on the bolt 14. A branch pipe may then be connected to the second nut so as to be in communication with the inside of the mains pipe 10.

FIG. 2

EP 0 253 630 A1

**Description**

## A METHOD OF PIPE RENOVATION

This invention relates to pipe renovation and more particularly but not exclusively to the renovation of mains pipes having branch pipes and transmitting fluids such as water or gas.

A method of renovating a pipe has been proposed in which method the pipe has inserted therein a liner tube formed from a flexible, fluid-tight material.

According to the first aspect of the present invention there is provided a lateral connection device for a pipe which has therein a flexible, fluid-impervious liner tube extending along the length of the pipe and which has a lateral opening, said liner tube having a hole at the location of said lateral opening, said connection device comprising a bolt having a lengthwise throughbore and an annular flange at one end, said bolt, in use of the device, projecting from the inside of the liner tube through the hole and the opening so that said flange is disposed internally of the liner tube overlapping said hole, a washer and a nut for engaging on the bolt to clamp the marginal portion of the liner tube surrounding the hole between the flange and the washer so that an annular seal is formed between the flange and said marginal portion, and support and fastening means for securing the connection device with respect to the pipe.

According to a second aspect of the present invention there is provided in combination, a pipe having therein a flexible, fluid-impervious liner tube extending along the length of the pipe and having therein a lateral opening, said liner tube having a hole at the location of said lateral opening, the diameter of which hole is smaller than that of the opening, and a lateral connection device comprising a bolt having a lengthwise throughbore and an annular flange at one end which flange has a diameter greater than that of said hole said bolt projecting from the inside of the liner tube through the hole and opening so that said flange is disposed internally of the liner tube overlapping said hole, a washer and a nut engaged on the bolt to clamp the marginal portion of the liner tube surrounding the hole between the flange and the washer so that an annular seal is formed between the flange and said marginal portion, and support and fastening means securing the connection device with respect to the pipe.

Preferably said flange and said washer are cylindrically curved and cooperate with each other.

Conveniently said support and fastening means comprises a shoulder member which spans the opening in the pipe and which is formed with a hole through which said bolt extends, and a second nut engaged on said bolt.

In preferred embodiments the flange is formed with one or more annular ribs which engage the internal surface of the liner tube thereby improving the seal with said liner tube and/or the washer is formed with one or more annular ribs which engage the external surface of the liner tube thereby improving the grip with said liner tube.

According to a third aspect of the present invention there is provided a method of making a lateral connection to a pipe which has a lateral opening and which has inserted therein a flexible, fluid-impervious liner tube extending along the length of the pipe comprising the steps of forming a hole in the liner tube at the location of the lateral opening, which hole is of a smaller diameter than that of the opening, introducing from the inside of the liner tube through the hole and the opening a bolt having a lengthwise throughbore and an annular flange at its internal end, said flange being of a greater diameter than said hole in the liner tube so as to overlap said hole, engaging on said bolt a washer, engaging from the exterior of the pipe a nut on the bolt thereby clamping the marginal portion of the liner tube surrounding the hole between the flange and the washer in such a way that an annular seal is formed between the flange and said marginal portion, and securing the arrangement with respect to the pipe.

The invention will now be described in more detail with reference to the accompanying diagrammatic drawings in which:-

Figure 1 is an exploded, part side part sectional view of the components used in a method according to the invention, and

Figure 2 is a part side part sectional view of the components shown in Figure 1 in an assembled form.

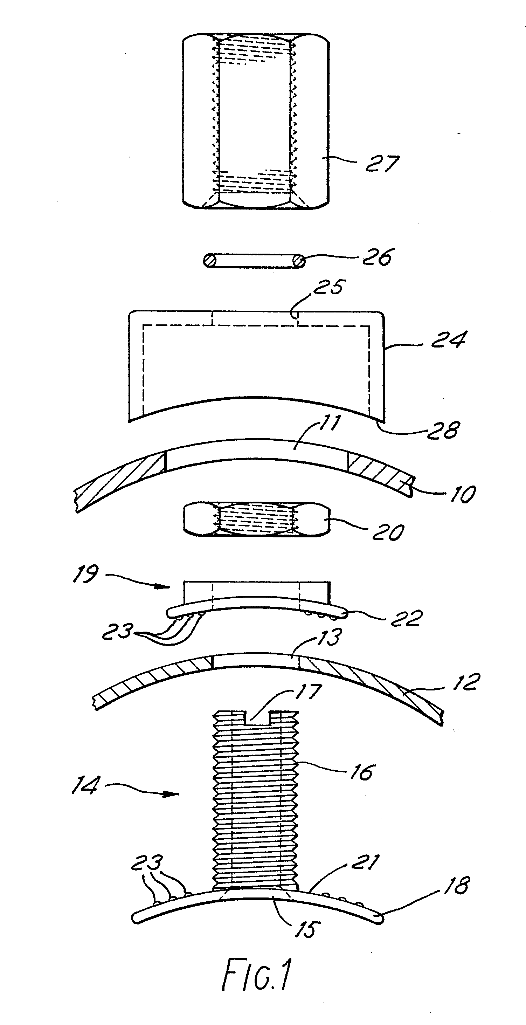

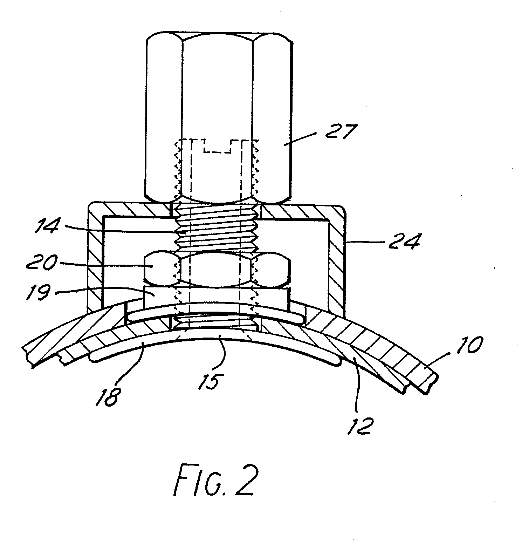

Figures 1 and 2 show a mains pipe 10 having at intervals along its length a number of lateral openings 11 (only one shown) for the introduction of, for example, branch pipes leading to respective houses or other points of utilisation. From time to time it is necessary to renovate the pipeline. A flexible, fluid impervious liner tube 12 made from a textile reinforced elastomer is inserted into the pipe 10 and holes 13 are formed in the liner tube 12 at the places where there is an opening 11. The diameter of each of the holes 13 is smaller than the opening 11 and is conveniently approximately equal to the diameter of the associate branch pipe.

For each hole/opening there is provided a bolt 14 having an axial through bore 15 approximately equal in diameter to the bore of the associated branch pipe, a transverse slot or recess 17 at one end of its shank 16 and an annular flange 18 at the other end of its shank. The bolt 14 is drawn along the inside of the liner 12 by means of a cord or other suitable means and the flangeless end of the bolt is passed through the hole 13 and the opening 11. A washer 19 is placed over the shank and a securing nut 20 is engaged on the shank, the washer being disposed in the opening 11 in the mains pipe but overlapping the hole 13 formed in the liner. The upper surfaces 21 of the flange 18 and the lower portion 22 of the washer 19 are cylindrically curved so as to co-operate with each other and with the curve of the liner as defined by the mains pipe and thus tightening of the nut 20 clamps the liner between the washer 19 and the flange 18 to effect a fluid impervious seal circumferentially of the hole 13.

In Figure 1 the flange and the washer are formed with annual ridges 23 or annular serrations which bite into the liner thus improving the seal.

A shoulder member 24 having an opening 25 is then placed over the bolt 14, as is a washer 26, and a second nut 27 is threaded onto the bolt. The lower face 28 of the shoulder is also cylindrically curved so as to lie snugly against the pipe in the region surrounding the opening 11. Tightening of the nut secures the liner together with its bolt washer and securing nut in position with respect to the pipe 10 and its opening 11.

The second nut 27 is of sufficient axial length so as to be able to accommodate the externally threaded connector element of the branch pipe associated with the opening 11.

The slot 17 enables suitable spanners and tools to be used to ensure that the curved surfaces of the flange 18, washer 19 and shoulder member 24 are correctly aligned and to hold the bolt against rotation whst the nut 20 is tightened thereby preventing tearing of the liner tube.

The above described method of renovating a mains pipe is clearly advantageous over the conventional method in which the whole mains pipe is completely replaced. The latter method involves exposing the pipe along its entire length thus causing great inconvenience. The former method involves exposing the ends of a given length of pipe together with the positions where a branch pipe joins the mains pipe and thus significantly reduces the costs of renovation and the inconvenience caused.

It will be appreciated that this method can be used to line a mains pipe having no branch pipes but to which mains pipe branch pipes are to be connected.

**Claims**

1. A lateral connection device for a pipe which has therein a flexible, fluid-impervious liner tube extending along the length of the pipe and which has a lateral opening, said liner tube having a hole at the location of said lateral opening, said connection device comprising a bolt having a lengthwise throughbore and an annular flange at one end, said bolt, in use of the device, projecting from the inside of the liner tube through the hole and the opening so that said flange is disposed internally of the liner tube overlapping said hole, a washer and a nut for engaging on the bolt to clamp the marginal portion of the liner tube surrounding the hole between the flange and the washer so that an annular seal is formed between the flange and said marginal portion, and support and fastening means for securing the connection device with respect to the pipe.

2. A device as claimed in claim 1 wherein the flange of the bolt is cylindrically curved and the washer is correspondingly cylindrically curved for cooperation with said flange.

3. A device as claimed in claim 1 or claim 2 wherein said support and fastening means comprises a shoulder member for spanning the opening in the pipe which shoulder member is formed with a hole through which, in use, said bolt extends, and a second nut for engagement on said bolt.

4. A device as claimed in any one of claims 1 to 3 wherein the flange is formed with one or more annular ribs for engagement with the internal surface of the liner tube to improve the seal.

5. A device as claimed in any one of claims 1 to 4 wherein the washer is formed with one or more annular ribs for engagement with the external surface of the liner tube to improve the grip.

6. In combination, a pipe having therein a flexible, fluid-impervious liner tube extending along the length of the pipe and having therein a lateral opening, said liner tube having a hole at the location of said lateral opening, the diameter of which hole is smaller than that of the opening, and a lateral connection device comprising a bolt having a lengthwise throughbore and an annular flange at one end which flange has a diameter greater than that of said hole said bolt projecting from the inside of the liner tube through the hole and opening so that said flange is disposed internally of the liner tube overlapping said hole, a washer and a nut engaged on the bolt to clamp the marginal portion of the liner tube surrounding the hole between the flange and the washer so that an annular seal is formed between the flange and said marginal portion, and support and fastening means securing the connection device with respect to the pipe.

7. A combination as claimed in claim 6 wherein said flange and said washer are cylindrically curved and cooperate with each other.

8. A combination as claimed in claim 6 or claim 7 wherein said support and fastening means comprises a shoulder member which spans the opening in the pipe and which is formed with a hole through which said bolt extends, and a second nut engaged on said bolt.

9. A combination as claimed in any one of claims 6 to 8 wherein the flange is formed with one or more annular ribs which engage the internal surface of the liner tube thereby improving the seal with said liner tube.

10. A combination as claimed in any one of claims 6 to 9 wherein the washer is formed with one or more annular ribs which engage the external surface of the liner tube thereby improving the grip with said liner tube.

11. A method of making a lateral connection to a pipe which has a lateral opening and which has inserted therein a flexible, fluid-impervious liner tube extending along the length of the pipe comprising the steps of forming a hole in the liner tube at the location of the lateral opening, which hole is of a smaller diameter than that of the opening, introducing from the inside of the liner tube through the hole and the opening a bolt having a lengthwise throughbore and an annular flange at its internal end, said flange being of a greater diameter than said hole in the liner tube so as to overlap said hole, engaging on said bolt a washer, engaging from the exterior of the pipe a nut on the bolt thereby clamping the marginal portion of the liner tube surrounding the hole between the flange and the washer in such a way that an annular seal is formed between the flange and said marginal portion, and securing the arrangement with respect to the pipe.

12. A method as claimed in claim 11 wherein the securing step comprises the placing of a shoulder member which spans the opening in the pipe and end portions of which engage the pipe and which shoulder member is formed with a hole for the bolt and engaging a second nut on said bolt thereby to secure the assembly with respect to the pipe.

0253630

FIG.1

FIG. 2

## DOCUMENTS CONSIDERED TO BE RELEVANT

EP 87306221.0

| Category | Citation of document with indication, where appropriate, of relevant passages | Relevant to claim | CLASSIFICATION OF THE APPLICATION (Int. Cl.4) |
|---|---|---|---|
| A | DD - A - 240 415 (VEB MELIO-RATIONSBAU MAGDEBURG) <br><br> * Totality * <br><br> -- | 1,2 | F 16 L 41/00 <br> F 16 L 55/10 |
| A | GB - A - 2 011 014 (BRITISH GAS CORPORATION) <br><br> * Totality * <br><br> -- | 1,3 | |
| A | GB - A - 13 997/A.D. 1909 (J.G. STEWART) <br><br> * Totality * <br><br> ---- | 1 | |

| | TECHNICAL FIELDS SEARCHED (Int. Cl.4) |
|---|---|
| | F 16 L 41/00 <br> F 16 L 55/00 |

The present search report has been drawn up for all claims

| Place of search | Date of completion of the search | Examiner |
|---|---|---|
| VIENNA | 06-10-1987 | SCHUGANICH |